# EUROPEAN PATENT SPECIFICATION

(11) **EP 4 037 399 B1**
(45) Date of publication and mention of the grant of the patent: **20.05.2026**
(21) Application number: 19947249.9
(22) Date of filing: 25.09.2019
(51) Int. Cl.: H04W 72/04, H04W 52/02

(54) **TERMINAL, BASE STATION AND COMMUNICATION METHOD**
ENDGERÄT, BASISSTATION UND KOMMUNIKATIONSVERFAHREN
TERMINAL, STATION DE BASE ET PROCÉDÉ DE COMMUNICATION

(43) Date of publication of application: 03.08.2022
(73) Proprietor: NTT DOCOMO, INC., Chiyoda-Ku Tokyo 100-6150 (JP)
(72) Inventor: TAKEDA, Daiki, Tokyo 100-6150 (JP); HARADA, Hiroki, Tokyo 100-6150 (JP)
(74) Representative: Hoffmann Eitle
(86) International application number: PCT/JP2019/037711
(87) International publication number: WO 2021/059413

(56) References cited:
- US-A1- 2019 254 110
- ERICSSON: "UE_ID based WUS grouping", vol. RAN WG2, no. Reno, NV, USA; 20190513 - 20190517, 13 May 2019 (2019-05-13), XP051731325, Retrieved from the Internet <URL:http://www.3gpp.org/ftp/Meetings%5F3GPP%5FSYNC/RAN2/Docs/R2%2D1907908%2Ezip> [retrieved on 20190513]
- LG ELECTRONICS: "Discussion on UE-grouping wake up signal in MTC", vol. RAN WG1, no. Prague, CZ; 20190826 - 20190830, 17 August 2019 (2019-08-17), XP051765127, Retrieved from the Internet <URL:http://www.3gpp.org/ftp/tsg_ran/WG1_RL1/TSGR1_98/Docs/R1-1908519.zip> [retrieved on 20190817]
- LENOVO ET AL.: "UE-group wake-up signal for Rel-16 MTC", 3GPP TSG RAN WG1 #97 R1-1906277, 3 May 2019 (2019-05-03), XP051708314
- "Discussion on UE-group wake up signal in MTC", 3GPP TSG RAN WG1 #98 R1-1909167, 17 August 2019 (2019-08-17), XP051765772
- "UE-group wake-up signal for eMTC", 3GPP TSG RAN WG1 #98 R1-1909464, 21 August 2019 (2019-08-21), XP051766070

## Description

### [TECHNICAL FIELD]

The present invention relates to a terminal, a base station and a communication method in a wireless communication system.

### [BACKGROUND ART]

In New Radio (NR) (also referred to as "5G") which is a successor system of Long Term Evolution (LTE), technologies satisfying a large-capacity system, a high-speed data transmission rate, a low delay, simultaneous connection of multiple terminals, a low cost, power saving, and the like have been discussed (for example, Non-Patent Document 1).

Further, in 3rd Generation Partnership Project (3GPP), extension of the technology for Internet of Things (IoT) based on LTE is also discussed. For example, for the purpose of power saving of an IoT-UE (user equipment), that is, a UE corresponding to Narrow Band IoT (NB-IoT) or enhanced Machine Type Communication (eMTC), a wake-up signal (WUS) which is also called an activation signal has been introduced in LTE-IoT of Release 15 (for example, Non-Patent Document 2).

Non-Patent Document 3 relates to UE_ID based WUS grouping.

Non-Patent Document 4 relates to UE-grouping wake-up signals in MTC.

Non-Patent Document 5 relates to UE-group wake-up signals in MTC.

Patent Document 1 relates to a method and apparatus for power savings at a user equipment.

### [PRIOR ART DOCUMENT]

### [PATENT DOCUMENT]

Patent Document 1: US 2019/254110 A1

### [NON-PATENT DOCUMENT]

Non-Patent Document 1: 3GPP TS 38.300 V15.6.0(2019-06)
Non-Patent Document 2: 3GPP TS 36.211 V15.6.0(2019-06)
Non-Patent Document 3: ERICSSON: "UE_ID based WUS grouping", 3GPP DRAFT R2-1907908
Non-Patent Document 4: LG ELECTRONICS: "Discussion on UE-grouping wake up signal in MTC", 3GPP DRAFT R1-1908519
Non-Patent Document 5: LENOVO et al.: "UE-group wake-up signal for Rel-16 MTC", 3GPP TSG RAN WG1 #97 R1-1906277

### [SUMMARY OF THE INVENTION]

### [PROBLEM TO BE SOLVED BY THE INVENTION]

A flexible arrangement of resources (e.g., time resources, frequency resources, or time and frequency resources) for transmitting WUS from a base station and receiving a terminal is under review in Release 16 (Rel-16) in addition to the conventional fixed arrangement. On the other hand, when WUS of Rel-15 (legacy WUS) and WUS of Rel-16 were mixed, it was not clear how WUS would be monitored.

The present invention has been made in view of the foregoing, and is intended to correctly specify a wake-up signal to be monitored in a wireless communication system.

### [MEANS FOR SOLVING PROBLEMS]

The present invention is defined by the independent claims. Preferred embodiments are defined by the dependent claims. Further aspects are provided for facilitating the understanding of the invention.

According to the disclosed technology, there is provided a terminal according to claim 1.

### [EFFECTS OF THE INVENTION]

According to the disclosed technology, a wake-up signal to be monitored can be correctly specified in a wireless communication system.

### [BRIEF DESCRIPTION OF DRAWINGS]

Fig. 1 is a diagram illustrating an example configuration of a wireless communication system according to an embodiment of the present invention;
Fig. 2 is a diagram (1) for explaining the WUS of Rel-15;
Fig. 3 is a diagram (2) for explaining the WUS of Rel-15;
Fig. 4 is a diagram (1) for explaining the WUS;
Fig. 5 is a diagram (2) for explaining the WUS;
Fig. 6 is a diagram illustrating an example (1) of resource allocation of WUS according to an embodiment of the present invention;
Fig. 7 is a diagram illustrating an example (2) of resource allocation of WUS according to an embodiment of the present invention;
Fig. 8 is a diagram illustrating an example (3) of resource allocation of WUS according to an embodiment of the present invention;
Fig. 9 is a diagram illustrating an example (4) of resource allocation of WUS according to an embodiment of the present invention;
Fig. 10 is a diagram illustrating an example (5) of resource allocation of WUS according to an embodiment of the present invention;
Fig. 11 is a diagram illustrating an example (6) of resource allocation of WUS according to an embodiment of the present invention;
Fig. 12 is a diagram illustrating an example (7) of resource allocation of WUS according to an embodiment of the present invention;
Fig. 13 is a diagram illustrating an example (8) of resource allocation of WUS according to an embodiment of the present invention;
Fig. 14 is a sequence diagram for explaining an example of monitoring a WUS according to an embodiment of the present invention;
Fig. 15 is a diagram illustrating an example (1) of a WUS arrangement according to an embodiment of the present invention;
Fig. 16 is a diagram illustrating an example (2) of a WUS arrangement according to an embodiment of the present invention;
Fig. 17 is a diagram illustrating an example (3) of a WUS arrangement according to an embodiment of the present invention;
Fig. 18 is a diagram illustrating an example (4) of a WUS arrangement according to an embodiment of the present invention;
Fig. 19 is a diagram illustrating an example (5) of a WUS arrangement according to an embodiment of the present invention;
Fig. 20 is a diagram illustrating an example (6) of a WUS arrangement according to an embodiment of the present invention;
Fig. 21 is a diagram illustrating an example of a functional configuration of a base station 10 according to an embodiment of the present invention;
Fig. 22 is a diagram illustrating an example of a functional configuration of a terminal 20 according to an embodiment of the present invention and
Fig. 23 is a diagram illustrating an example of a hardware configuration of each of a base station 10 or a terminal 20 according to an embodiment of the present invention.

### [MODE FOR CARRYING OUT THE INVENTION]

Hereafter, embodiments of the present invention will be described with reference to the appended drawings. Embodiments to be described below are examples, and embodiments to which the present invention is applied are not limited to the following embodiments.

The existing technology is appropriately used for an operation of a wireless communication system of an embodiment of the present invention. Here, the existing technology is, for example, the existing LTE but is not limited to the existing LTE. The term "LTE" used in this specification has a broad meaning including LTE-Advanced and schemes after LTE-Advanced (for example, NR) unless otherwise specified.

Also, according to an embodiment of the present invention to be described below, terms such as a synchronization signal (SS), a primary SS (PSS), a secondary SS (SSS), a physical broadcast channel (PBCH), a physical random access channel (PRACH) used in the existing LTE are used. This is for convenience of description, and signals, functions, or the like similar to them may be referred by other names. The above terms in NR correspond to NR-SS, NR-PSS, NR-SSS, NR-PBCH, NR-PRACH, and the like. However, even a signal used for NR is not always indicated by "NR-."

Also, according to an embodiment of the present invention, a duplexing scheme may be Time Division Duplexing (TDD) scheme, may be Frequency Division Duplexing (FDD) scheme, or may be other schemes (for example, Flexible Duplexing or the like).

Further, according to an embodiment of the present invention, when a radio parameter or the like is "configured," it may mean that a predetermined value is pre-configured or may mean that a radio parameter indicated by a base station 10 or a terminal 20 may be configured.

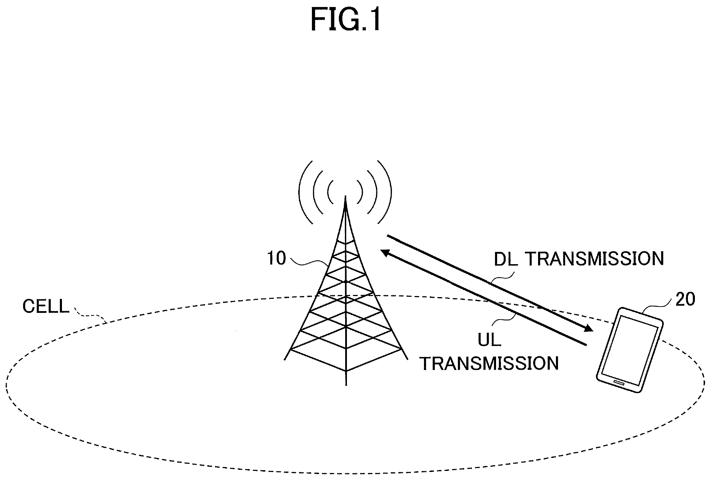

Fig. 1 is a diagram for describing a wireless communication system according to an embodiment of the present invention. The wireless communication system according to an embodiment of the present invention includes a base station 10 and a terminal 20 as illustrated in Fig. 1. Fig. 1 illustrates one base station 10 and one terminal 20, but this is an example, a plurality of base stations 10 or a plurality of terminals 20 may be provided.

The base station 10 is a communication device that provides one or more cells and performs wireless communication with the terminal 20. Physical resources of a radio signal are defined by time domain and frequency domain, and time domain may be defined by the number of OFDM symbols, and frequency domain may be defined by the number of sub-bands or resources blocks. The base station 10 transmits a synchronization signal and system information to the terminal 20. The synchronization signal is, for example, an NR-PSS or an NR-SSS. The system information is transmitted, for example, through an NR-PBCH and is also called broadcast information. As illustrated in Fig. 1, the base station 10 transmits a control signal or data to the terminal 20 in downlink (DL) and receives a control signal or data from the terminal 20 in uplink (UL). Both the base station 10 and terminal 20 can transmit and receive signals by performing beam forming. Further, both the base station 10 and the terminal 20 can apply Multiple Input Multiple Output (MIMO) communication to DL or UL. Further, both the base station 10 and the terminal 20 may perform communication via a secondary cell (SCell) and a primary cell (PCell) through carrier aggregation (CA) .

The terminal 20 is a communication device with a wireless communication function such as a smart phone, a mobile phone, a tablet, a mobile terminal, or a machine-to-machine (M2M) communication module. As illustrated in Fig. 1, the terminal 20 utilizes various kinds of communication services provided by the wireless communication system by receiving a control signal or data from the base station 10 in DL and transmitting a control signal or data to the base station 10 in UL.

As described above, various types of terminals can be used as the terminal 20, but the terminal 20 according to an embodiment of the present invention is assumed to be mainly an IoT-UE of Release 16 of LTE (or Release after Release 16). However, the terminal 20 is not limited to the IoT-UE of Release 16 of LTE (or Release after Release 16). Also, the assumed IoT-UE may be an NB-IoT UE or an eMTC UE.

In the wireless communication system according to an embodiment of the present invention, the base station 10 transmits the WUS and the terminal 20 monitors the WUS. First, WUS will be described.

Before the WUS is introduced, terminal 20 in the idle state monitors the periodically arriving PO (Paging Occasion, paging opportunity) each time. It should be noted that monitoring the PO may be rephrased as monitoring the paging PDCCH or monitoring the paging search space. It should be noted that the WUS need not be a wake-up signal defined by the LTE of Rel-15. For example, the WUS may be an activation signal to reduce time to monitor PDCCH for a connected UE rather than paging.

On the PO monitor, the terminal 20 demodulates a DCI transmitted by a PDCCH and checks if the DCI is directed to the terminal 20. Therefore, regardless of whether the DCI to which the terminal 20 is directed has been transmitted or not, the terminal 20 has to perform a demodulation operation for each PO, and the demodulation operation is likely to result in wasted power consumption. In particular, if a paging PDCCH is transmitted repeatedly, the DCI must also be demodulated repeatedly, and there is a high likelihood of large wasted power consumption.

Therefore, WUS was introduced in Rel-15 LTE-IoT. WUS in Rel-15 LTE-IoT (WUS specified in the specification of LTE Rel-15) is associated one-on-one with PO. The resource via which the WUS is sent is, for example, calculated from a UE-ID (e.g., IMSI) . Further, it is indicated that there is paging to the terminal 20 by one bit in the WUS. The sequence of WUS is calculated from the cell ID, the time position of PO, etc., as described in Non-Patent Document 1. Hereinafter, a resource via which WUS is sent is referred to as a "WUS resource".

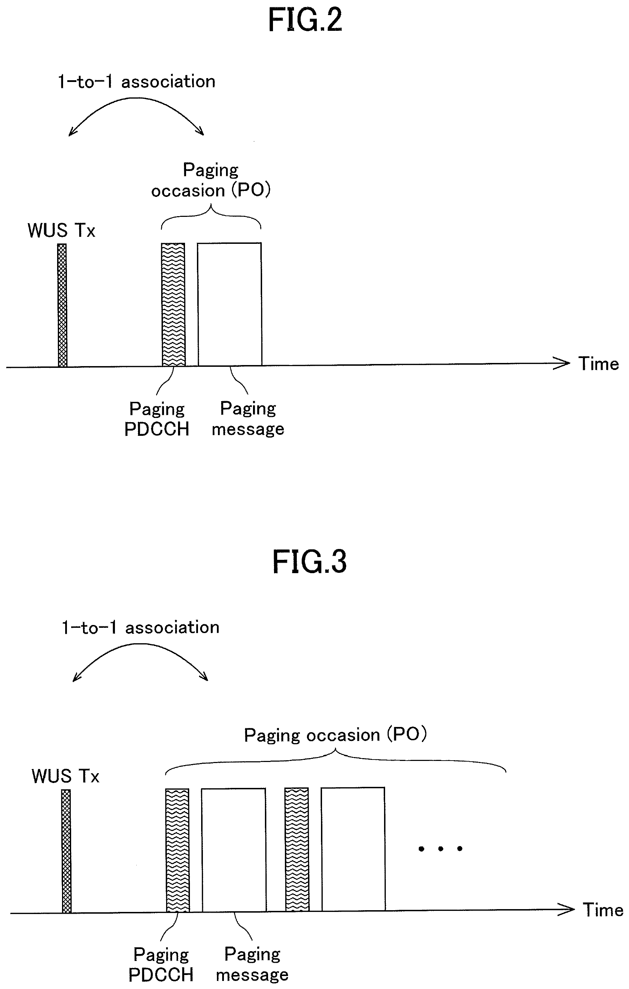

The terminal 20 monitors the WUS through a WUS resource and upon detecting the WUS (a sequence specified by the WUS parameter indicated in the system information or the like), the terminal 20 monitors the paging PDCCH at the PO. That is, the WUS is an activation signal that triggers monitoring of a paging occasion. An operation example related to WUS of Rel-15_LTE-IoT will be described with reference to Figs. 2 and 3.

Fig. 2 is a diagram (1) for explaining the WUS of Rel-15. Fig. 2 illustrates an example in which no repeated transmission of paging PDCCH is performed. As shown in Fig. 2, when the terminal 20 detects the WUS, the terminal 20 monitors the paging PDCCH and reads the paging message if the DCI is directed to itself.

Fig. 3 is a diagram (2) for explaining the WUS of Rel-15. Fig. 3 shows an example of repeated transmission of paging PDCCH. When WUS is detected by the terminal 20, the terminal 20 repeatedly monitors the paging PDCCH.

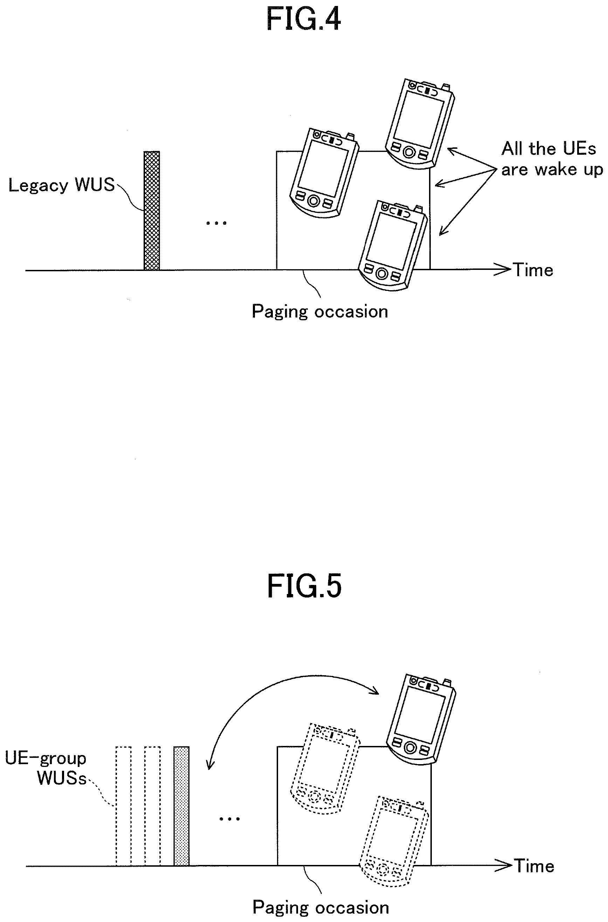

Fig. 4 is a diagram (1) for explaining a WUS. Rel-15 WUS is associated with PO on a one-to-one basis. On the other hand, the PO is common to the plurality of terminals 20. Therefore, all of the plurality of terminals 20 in the idle state in which the WUS is detected are activated to monitor the paging PDCCH. That is, as shown in Fig. 4, many terminals 20 may be activated which may not be the destination of the paging.

Fig. 5 is a diagram (2) for explaining a WUS. Thus, in an embodiment of the present invention involving the LTE Rel-16, grouping of the terminal 20 is performed based on a UE-ID or the like. That is, as shown in Fig. 5, the terminal 20 belonging to a group only monitors the active WUS of that group. This can reduce the number of terminals 20 that start up despite not being the destination of the paging.

The group is identified by a UE group ID. The terminal 20 supporting Rel-16_WUS also supports WUS of Rel-15. That is, the terminal 20 supporting the Rel-16_WUS may receive the Rel-16_WUS and execute the associated processing, or it may receive the Rel-15 WUS and execute the associated processing.

Hereinafter, WUS of Rel-16 is described as Rel-16_WUS, and WUS of Rel-15 is described as Legacy WUS. If these are not specifically distinguished, the term "WUS" shall be used. Legacy WUS may also be referred to as a legacy wake-up signal.

The UE group ID is used to generate a sequence of Rel-16_WUS. The number of UE groups can be configured from base station 10 to terminal 20, for example, broadcast from base station 10 by system information (SIB).

The multiplexing of Rel-16_WUS and legacy WUS may be performed by any of the following methods 1)-3) or a combination.
1) TDM (Time division multiplexing)
2) FDM (Frequency division multiplexing)
3) Single sequence CDM (Code division multiplexing)

Multiplexing between multiple WUS may also be performed by any or a combination of the following methods 1)-3).
1) TDM
2) FDM
3) Single sequence CDM

The single sequence CDM is, for example, a method in which a plurality of WUS sequences is generated by multiplying a base WUS sequence by orthogonal signs, that is, signs with zero or low cross-correlation, and one of the generated WUS sequences is selected and transmitted.

According to an embodiment of the present invention, a method of allocating a WUS resource (a time/frequency resource) that is a resource monitored by the terminal 20 and used by the base station 10 when transmitting WUS to the terminal 20 will be described.

In embodiments of the present invention, up to two WUS resources are configured for each domain of time and frequency. "configured" herein may mean that each WUS resource is configured by a base station 10 to a terminal 20, or that a base station 10 determines each WUS resource.

Multiple WUS may also be multiplexed using CDM (e.g., single sequence CDM) within a single WUS resource.

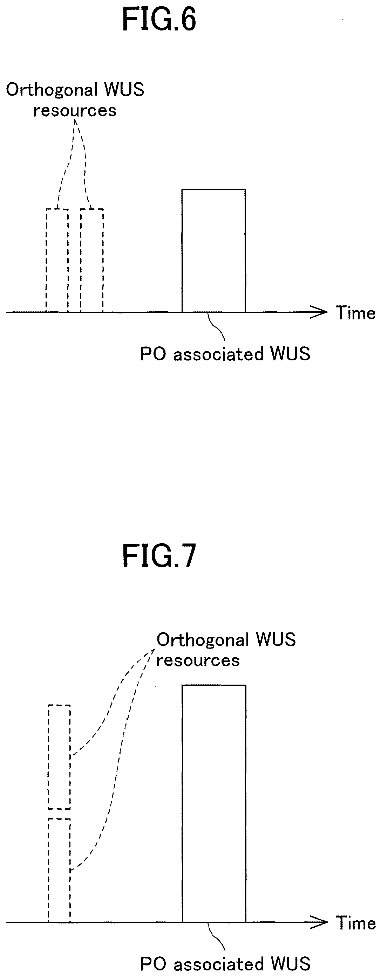

Fig. 6, Fig. 7 and Fig. 8 illustrate an example where multiple orthogonal WUS resources are configured. In the all figures, the vertical axis is corresponding to frequency domain and the horizontal axis is corresponding to time domain. "Orthogonal" means that the resources are not overlapped.

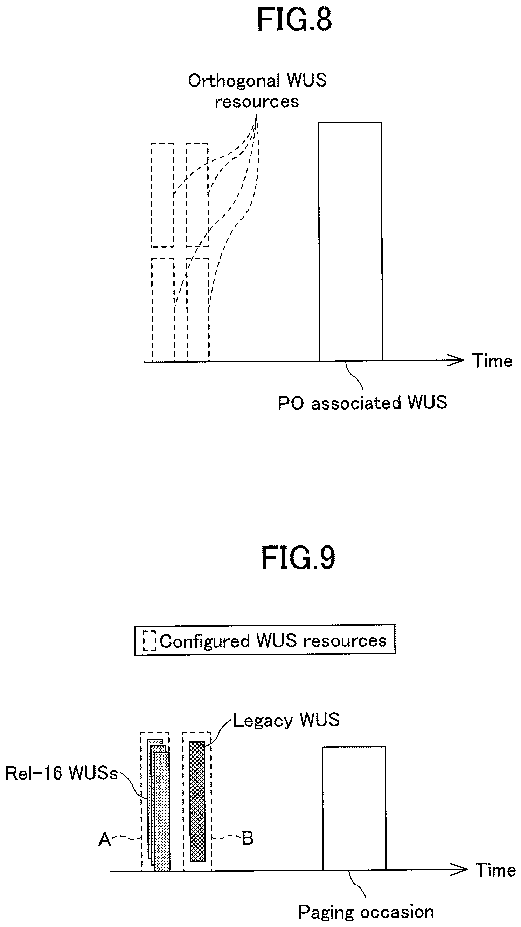

Fig. 6 shows an example in which two WUS resources were configured in time domain. Figure 7 shows an example where two WUS resources were configured in frequency domain. Figure 8 shows an example where four WUS resources were configured.

Fig. 9-13 illustrates an example in which Rel-16_WUS or legacy WUS is transmitted from a base station 10 to a terminal 20 in the WUS resource described above. Fig. 9-13 shows the case where legacy WUS is allocated to the WUS resource, respectively, but the legacy WUS need not be allocated to the WUS resource.

Fig. 9 is a diagram showing an example (4) of resource allocation of WUS according to an embodiment of the present invention. Fig. 9 shows an example in which WUS resource A and WUS resource B are arranged in time domain. As shown in Fig. 9, the plurality of Rel-16_WUSs multiplexed by CDM are transmitted through WUS resource A, and the legacy WUS is transmitted through WUS resource B. Note that multiple Rel-16_WUSs need not be multiplexed on WUS resource A, and one Rel-16_WUS may be transmitted.

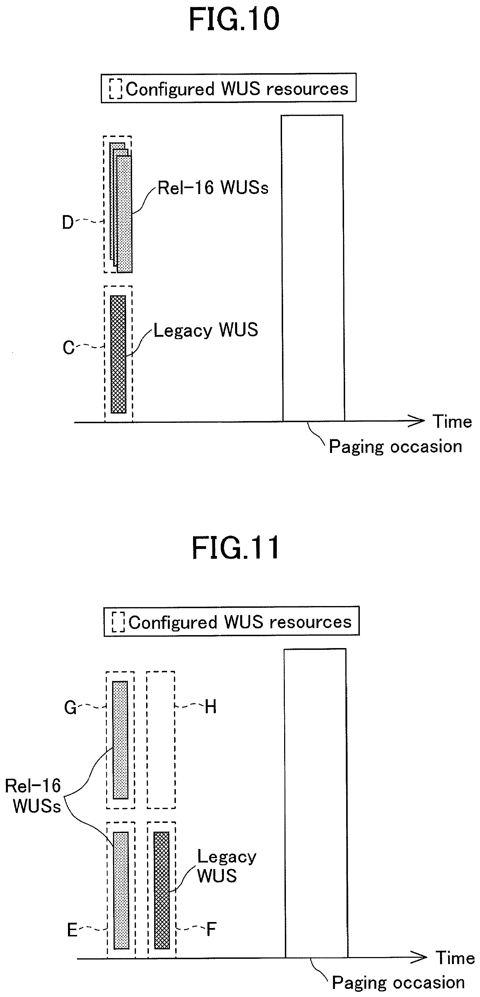

Fig. 10 is a diagram showing an example (5) of resource allocation of WUS according to an embodiment of the present invention. Fig. 10 shows an example where the WUS resource C and the WUS resource D are arranged in frequency domain. As shown in Fig. 10, legacy WUS is transmitted through WUS resource C and a plurality of Rel-16_WUSs multiplexed by CDM are transmitted through WUS resource D. Note that multiple Rel-16_WUSs need not be multiplexed on WUS resource D, and one Rel-16_WUS may be transmitted.

Fig. 11 is a diagram showing an example (6) of resource allocation of WUS according to an embodiment of the present invention. Fig. 11 shows an example in which the WUS resource E, the WUS resource F, the WUS resource G and the WUS resource H are arranged in time domain and frequency domain. As shown in Fig. 11, Rel-16_WUS is transmitted through each of WUS resources E and G, and legacy WUS is transmitted in WUS resource F.

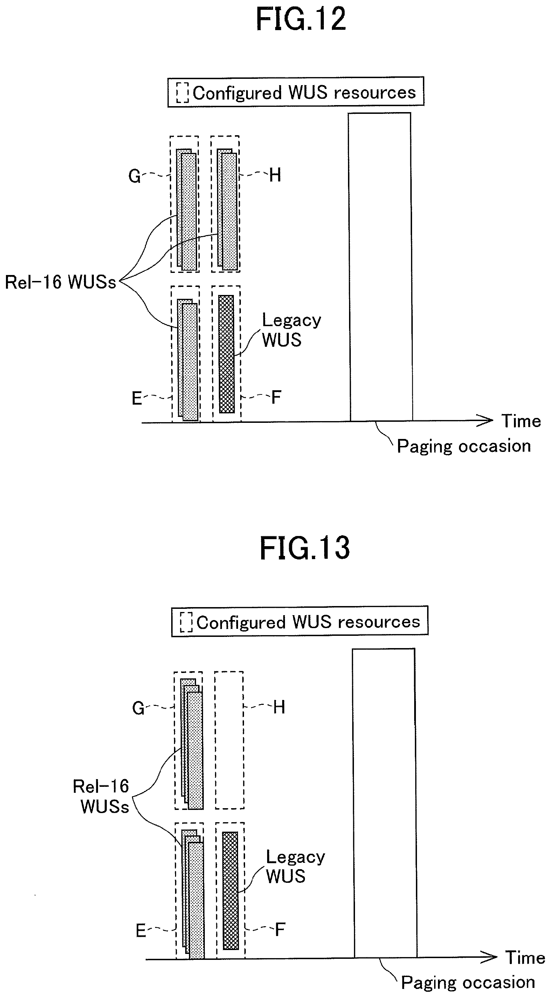

Fig. 12 is a diagram showing an example (7) of resource allocation of WUS according to an embodiment of the present invention. Fig. 12 shows an example in which the WUS resource E, the WUS resource F, the WUS resource G, and the WUS resource H are arranged in time domain and frequency domain. As shown in Fig. 12, Rel-16_WUS is transmitted through each of WUS resources E and G, and legacy WUS is transmitted through WUS resource F.

Fig. 13 is a diagram showing an example (8) of resource allocation of WUS according to an embodiment of the present invention. Fig. 13 shows an example in which the WUS resource E, the WUS resource F, the WUS resource G, and the WUS resource H are arranged in time domain and frequency domain. As shown in Fig. 13, a plurality of Rel-16_WUSs multiplexed on each of WUS resource E and WUS resource G are transmitted, and legacy WUS is transmitted through WUS resource F.

Here, a terminal 20 may monitor only one of the WUS resources specified in time domain and frequency domain. Accordingly, the terminal 20 may detect WUS in accordance with the following Step 1-Step 3.
Step 1) a UE group ID is configured for the terminal 20 supporting Rel-16_WUS. The gap configuration between PO and WUS may also be performed.
Step 2) Based on the configured UE group ID, the terminal 20 determines the location in time domain and frequency domain of the WUS resource to be monitored.
Step 3) The terminal 20 monitors the determined WUS resource in time domain and frequency domain.

For Radio Resource Control (RRC) signaling related to the configuration of Rel-16_WUS, for example, the terminal 20 supporting Rel-16_WUS may support the signaling related to Rel-15_WUS. For example, parameters related to WUS transmission timing may be shared between Rel-15 and Rel-16 for efficient signaling.

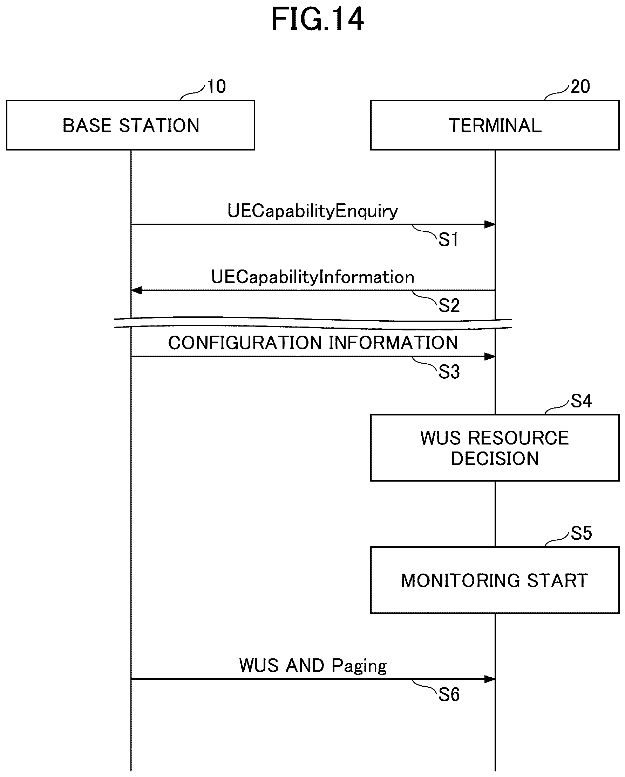

Fig. 14 is a sequence diagram illustrating an example of monitoring WUS in an embodiment of the present invention. In step S1 shown in Fig. 14, the base station 10 transmits a "UECapabilityEnquiry" which means a query of UE capabilities to the terminal 20. Subsequent to step S2, the terminal 20 transmits a "UECapabilityInformation" which means UE capability report to the base station 10. "UECapabilityInformation" includes the UE capabilities supported by the terminal 20. The base station 10 identifies the supported UE capabilities based on the received "UECapabilityInformation".

For example, the "UECapabilityInformation" reported to the base station 10 from the terminal 20 in step S2 may include information indicating that the Rel-15_WUS is supported and information indicating that the Rel-16_WUS is supported. It may also include a parameter indicating the shortest gap between the PO associated with Rel-15_WUS and the Rel-15_WUS, and a parameter indicating the shortest gap between the PO associated with Rel-16_WUS and the Rel-16_WUS.

In step S3, the base station 10 transmits the configuration information regarding the WUS to the terminal 20. The configuration information related to WUS may be system information, for example, "SystemInformationBlockType2" or "SystemInformationBlockType2-NB-r13" or the like. Step S3 may be executed before Steps S1 and S2.

For example, the "configuration information" reported from the terminal 20 to the base station 10 in step S3 may include a parameter indicating the maximum interval length of Rel-15_WUS and a parameter indicating the maximum interval length of Rel-16_WUS. Additionally, a parameter indicating the number of consecutive POs associated with Rel-15 WUS and a parameter indicating the number of consecutive POs associated with Rel-16_WUS may be included. Additionally, a parameter indicative of the position of Rel-15 WUS in frequency domain and a parameter indicative of the position of Rel-16_WUS in frequency domain may be included.

Here, if the configuration regarding the Rel-16_WUS is set to a value common to the Rel-15_WUS such as time offset, time duration, frequency position (Freq. location), the number of POs (numPOs), etc., the base station 10 does not need to indicate, to the terminal 20, the configuration regarding the Rel-16_WUS. For example, if the configuration for Rel-16_WUS is not indicated, the terminal 20 may use the configuration for Rel-15 WUS as the configuration for Rel-16_WUS as the default operation.

For example, assuming that independent configurations are supported for Rel-15_WUS and Rel-16_WUS, an indication of the Rel-16_WUS configuration may be specified as optional.

If, for example, both the Rel-15_WUS configuration and the Rel-16_WUS configuration are indicated, the Rel-16_WUS configuration may be defined based on the Rel-15_WUS configuration. For example, the time offset may be the same as the time position of Rel-15_WUS, or it may be an offset based on the time position of Rel-15_WUS. For example, the period and the number of PO may be the same value as the Rel-15_WUS or a value based on the Rel-15_WUS (e.g., an integer multiple). For example, the frequency position may be the same as that of Rel-15_WUS, or the frequency position of Rel-16_WUS may be determined from the position where the frequency position of Rel-15_WUS is excluded.

For example, in step S3, the terminal 20 may receive from the base station 10 information about the position in time domain or frequency domain in which the Rel-16_WUS and Rel-15_WUS, i.e., legacy WUS, are allocated. The information can be, for example, an index indicating the location in time domain and frequency domain, or it can be a joint-coded index with the number of WUS.

In step S4, the terminal 20 determines the WUS resource based on the configuration information regarding the WUS. Subsequently, the terminal 20 starts monitoring the determined WUS resource (S5). The base station 10 transmits the WUS and paging to the terminal 20, and the terminal 20 receives the WUS in the determined WUS resource and subsequently receives the paging (S6).

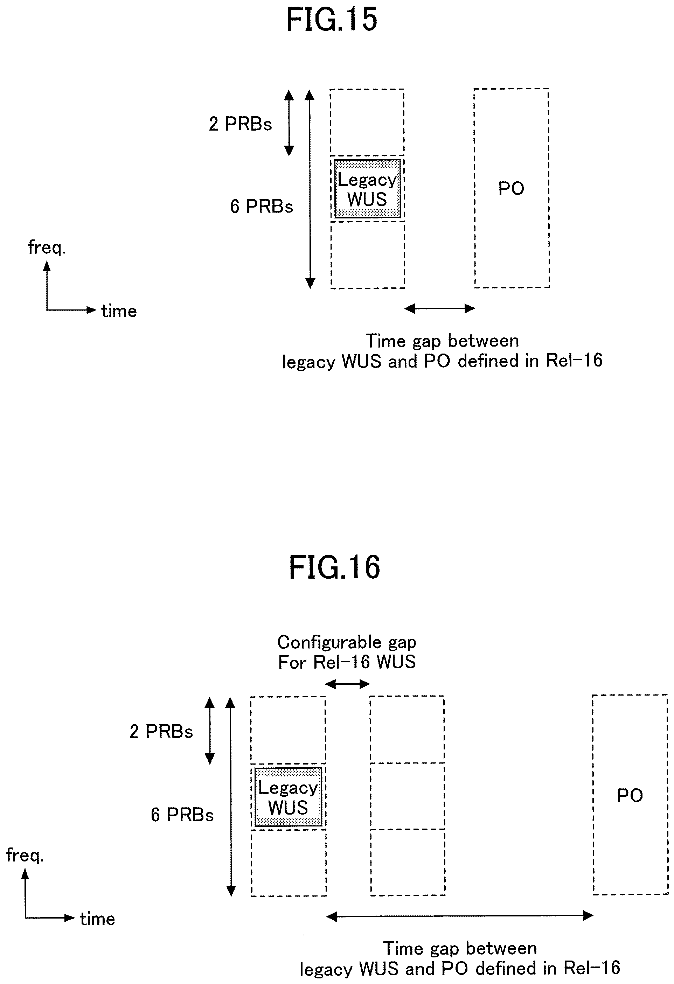

Fig. 15-20 illustrates an example where the Rel-16_WUS or legacy WUS is transmitted from the base station 10 to the terminal 20 in the WUS resource described above, including the case where time domain or frequency domain is extended. Note that Fig. 15-20 indicates the case where legacy WUS is arranged in the WUS resource, respectively, but legacy WUS may not be arranged in the WUS resource. In step S3 of Fig. 14, the terminal 20 may receive from the base station 10 information about the position in time domain or frequency domain in which Rel-16_WUS and Rel-15_WUS, or legacy WUS, shown in Fig. 15-20, are allocated.

Here, a terminal 20, which supports only legacy WUS, monitors the legacy WUS in a manner of Rel-15 and prior to Rel-15. The manner defines the position of legacy WUS in frequency domain and the gap in time domain between legacy WUS and PO. On the other hand, a terminal 20 that supports Rel-16, in which legacy WUS and the Rel-16_WUS are configured, may monitor the legacy WUS resource as one of the WUS resources defined as Rel-16_WUS. Therefore, WUS resource configurations defined as Rel-16_WUS need to be clearly defined.

Fig. 15 is a diagram illustrating an example (1) of a WUS arrangement according to an embodiment of the present invention. As shown in FIG. 15, the WUS resource in which the legacy WUS is located is set to a time gap with the PO. Also, the WUS resource in which the legacy WUS is allocated may be configurable with three frequency positions of the 2PRB (Physical Resource Block) width in frequency domain. The configurations for the WUS resource shown in Fig. 15 may be for the eMTC.

Fig. 16 is a diagram illustrating an example (2) of a WUS arrangement according to an embodiment of the present invention. The WUS resource in which legacy WUS is allocated and the WUS resource in which Rel-16_WUS is allocated may be determined based on the position in time domain or frequency domain of the legacy WUS. For example, two or three WUS resources may be configured in time domain. The network may configure the position of the WUS resource in time domain relative to the position of the WUS resource in which the legacy WUS is allocated. In order to set relative to the position of the WUS resource in which the legacy WUS is allocated, a time gap between the WUS resource in which the legacy WUS is allocated and the WUS resource in which the Rel-16_WUS is allocated may be additionally configured. The network may also perform an indication of a position in frequency domain of a WUS resource in which Rel-16_WUS is allocated, as well as an indication of a position in frequency domain of a WUS resource in which Legacy WUS is allocated. That is, three frequency positions of 2PRB width in frequency domain may be configurable to Rel-16_WUS.

As shown in FIG. 16, a position in time domain of a WUS resource in which Rel-16_WUS is allocated may be configured with a delay in time domain from legacy WUS due to a time gap. That is, the position in time domain of the WUS resource in which Rel-16_WUS is allocated may be determined by the position relative to the legacy WUS. A WUS resource that is configured with a delay in time domain from legacy WUS due to a time gap may be configured with a time gap between itself and PO based on a time gap between the legacy WUS and the PO plus the relative position in time domain.

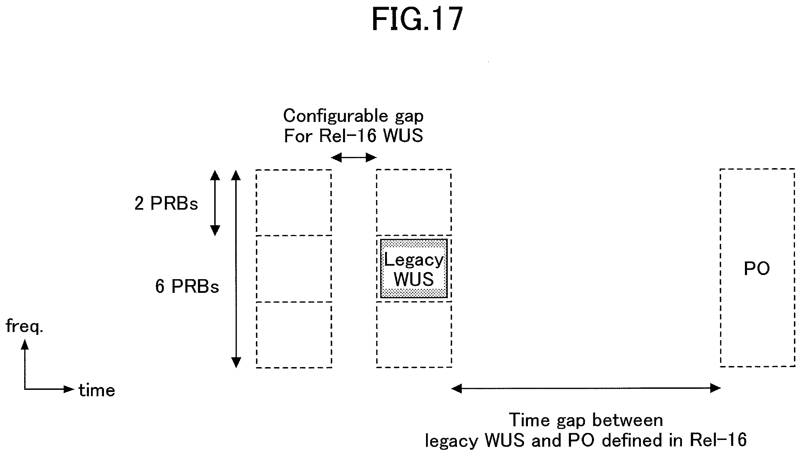

FIG. 17 is a diagram illustrating an example (3) of a WUS arrangement according to an embodiment of the present invention. As shown in Fig. 17, the position in time domain of the WUS resource in which Rel-16_WUS is allocated may be configured earlier in time domain than legacy WUS due to a time gap. That is, the position in time domain of the WUS resource in which Rel-16_WUS is allocated may be determined by the position relative to the legacy WUS. A WUS resource that is configured in advance of legacy WUS in time domain due to a time gap may be configured with a time gap between itself and PO based on a time gap between the legacy WUS and the PO plus the relative position in time domain.

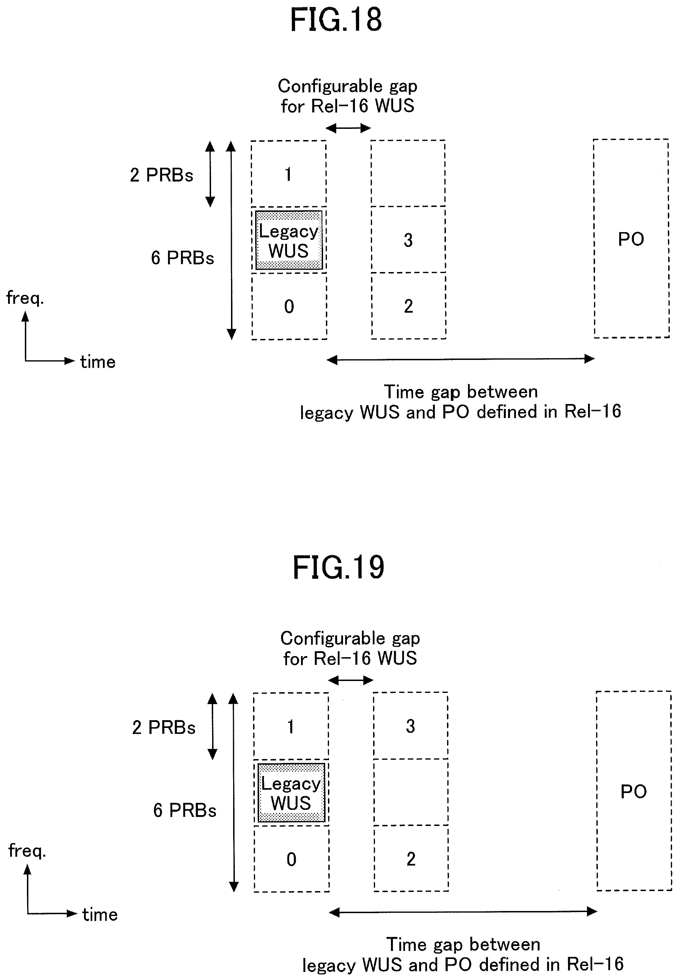

FIG. 18 is a diagram illustrating an example (4) of a WUS arrangement according to an embodiment of the present invention. If legacy WUS is not configured to the same WUS resource of Rel-16_WUS, or if a signaling is supported in which legacy WUS is not configured to the same WUS resource of Rel-16_WUS, then the association between a UE group and the WUS resource may be determined based on the WUS resources excluding WUS resources where legacy WUS is allocated.

For one possible allocation of WUS resources shown in Fig. 18, "a" of (a, b) shows a resource position located in time domain and "b" of (a, b) shows a resource position located in frequency domain. That is, in Fig. 18, six WUS resource candidates (0, 0), (1, 0), (0, 1), (1, 1), (2, 0), and (2, 1) are defined. As shown in Figure 18, legacy WUS is placed in (0, 1).

As shown in Fig. 18, the UE group ID = 0 may correspond to the WUS resource (0, 0), and the UE group ID = 1 may correspond to the WUS resource (0, 2). Further, the UE group ID = 2 may correspond to the WUS resource (1,0), and the UE group ID = 3 may correspond to the WUS resource (1,1). That is, Rel-16_WUS is allocated to the WUS resource except for the resource where legacy WUS is allocated.

It should be noted that the position of the Rel-16_WUS in time domain of the WUS resource of (1,0), (1,1), and (1,2) may be configured in advance of the legacy WUS in time domain by a time gap, as opposed to Fig. 18.

FIG. 19 is a diagram illustrating an example (5) of a WUS arrangement according to an embodiment of the present invention. As shown in Figure 19, legacy WUS is placed in (0, 1). Further, as shown in Fig. 19, the UE group ID = 0 may correspond to the WUS resource (0, 0), and the UE group ID = 1 may correspond to the WUS resource (0, 2). Further, the UE group ID = 2 may correspond to the WUS resource (1,0), and the UE group ID = 3 may correspond to the WUS resource (1,2). That is, Rel-16_WUS is allocated to the WUS resource except for the resource where legacy WUS is allocated.

It should be noted that the position of the Rel-16_WUS in time domain of the WUS resource of (1,0), (1,1), and (1,2) may be configured in advance of the legacy WUS in time domain by a time gap, as opposed to Fig. 19.

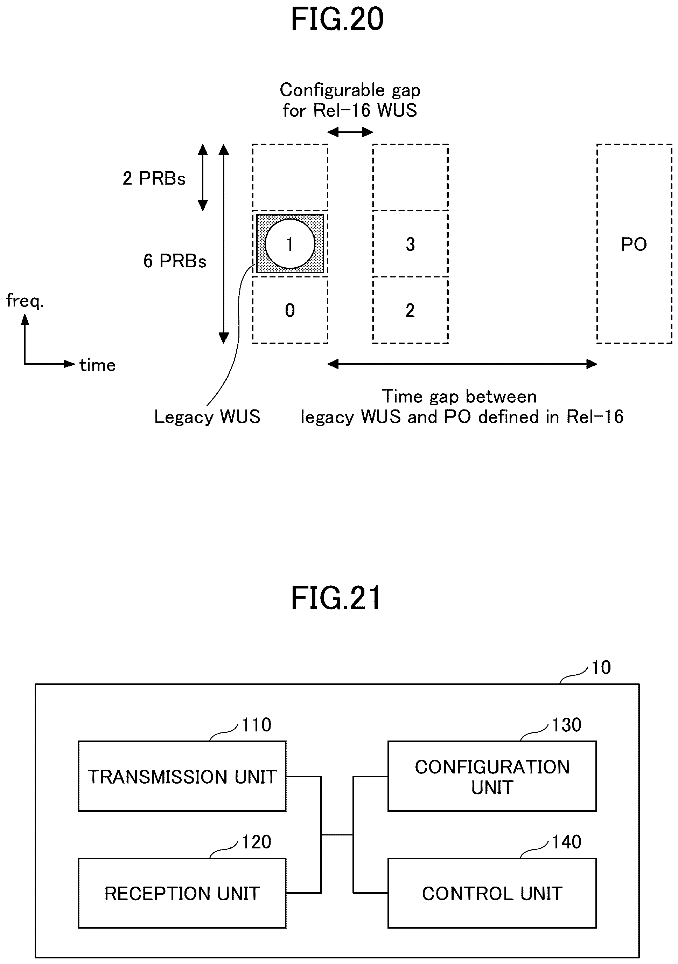

FIG. 20 is a diagram illustrating an example (6) of a WUS arrangement according to an embodiment of the present invention. If legacy WUS is configured to the same WUS resource of Rel-16_WUS, or if a signaling is supported in which legacy WUS is configured to the same WUS resource of Rel-16_WUS, then the association between the UE group and the WUS resource may be determined based on the WUS resources including the WUS resources where legacy WUS is allocated.

As shown in Figure 20, legacy WUS is placed in (0, 1). Further, as shown in Fig. 20, the UE group ID = 0 may correspond to the WUS resource (0, 0), and the UE group ID = 1 may correspond to the WUS resource (0, 1). That is, legacy WUS and Rel-16_WUS are allocated to the WUS resource (0, 1). Further, the UE group ID = 2 may correspond to the WUS resource (1,0), and the UE group ID = 3 may correspond to the WUS resource (1, 1). That is, Rel-16_WUS is allocated to the WUS resource including the WUS resource where legacy WUS is allocated.

As shown in FIGS. 19 and 20, the pattern in which the WUS is placed is changed depending on whether legacy WUS and Rel-16_WUS are allocated to the same WUS resource. That is, the terminal 20 can determine the pattern in which the WUS resource is placed in accordance with whether or not legacy WUS and Rel-16_WUS are allocated to the same WUS resource.

According to the embodiments described above, the base station 10 and terminal 20 can monitor WUS resources to which legacy WUS and Rel-16_WUS are allocated based on the position of the legacy WUS in time domain or frequency domain, depending on the associated UE group ID.

That is, a wake-up signal to be monitored in a wireless communication system can be correctly identified.

### (Equipment configuration)

Next, example functional configurations of a base station 10 and a terminal 20 that execute the processes and the operations described above will be described. The base station 10 and the terminal 20 have functions for implementing the embodiments described above. However, each of the base station 10 and the terminal 20 may have only some of the functions in the embodiment.

### <Base station 10>

Fig. 21 is a diagram illustrating an example of a functional configuration of the base station 10 in an embodiment of the present invention. As illustrated in Fig. 21, the base station 10 includes a transmission unit 110, a reception unit 120, a configuration unit 130, and a control unit 140. The functional configuration illustrated in Fig. 18 is only an example. A functional classification and names of the functional unit may be any classification and any names as long as the operation according to an embodiment of the present invention can be executed.

The transmission unit 110 includes a function of generating a signal to be transmitted to the terminal 20 side and transmitting the signal wirelessly. Further, the transmission unit 110 transmits an inter-network node message to other network nodes. The reception unit 120 includes a function of receiving various kinds of signals transmitted from the terminal 20 and acquiring, for example, higher layer information from the received signals. Further, the transmission unit 110 includes a function of transmitting NR-PSS, NR-SSS, NR-PBCH, and DL/UL control signals or the like to the terminal 20. Also, the reception unit 120 receives the inter-network node message from other network nodes.

The configuration unit 130 stores configuration information set in advance and various kinds of configuration information to be transmitted to the terminal 20. For example, content of the configuration information is information related to the WUS transmission setting and the paging transmission setting corresponding to the UE capability of the terminal 20 or the like.

As described in the embodiment, the control unit 140 performs control related to the WUS and the paging to be transmitted to the terminal 20 as described in the embodiment. The functional unit related to signal transmission in the control unit 140 may be included in the transmission unit 110, and the functional unit related to signal reception in the control unit 140 may be included in the reception unit 120.

### <Terminal 20>

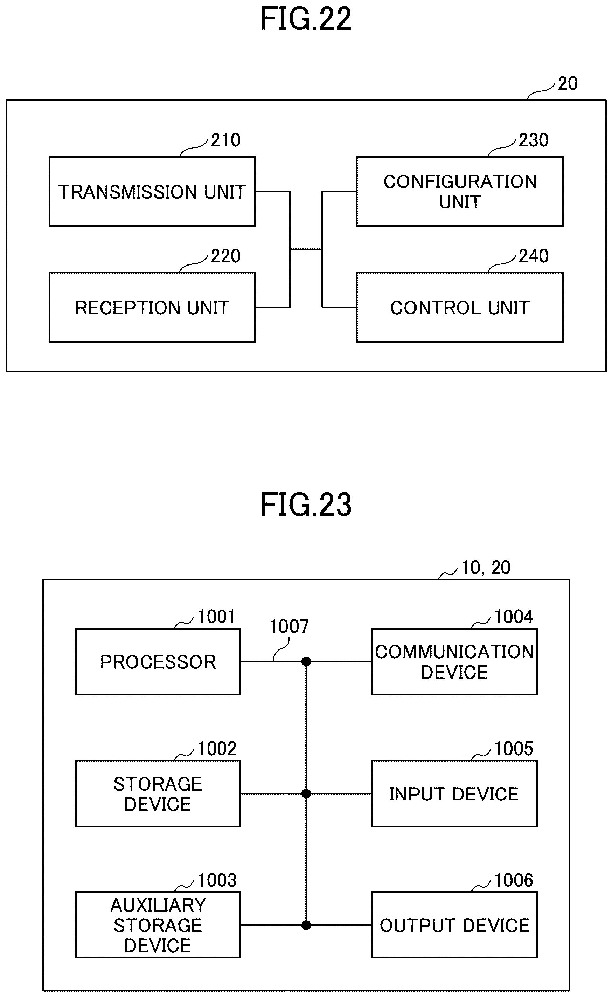

Fig. 22 is a diagram illustrating an example of a functional configuration of the terminal 20 in an embodiment of the present invention. As illustrated in Fig. 22, the terminal 20 includes a transmission unit 210, a reception unit 220, a configuration unit 230, and a control unit 240. The functional configuration illustrated in Fig. 22 is only an example. A functional classification and names of the functional unit may be any classification and any names as long as the operation according to an embodiment of the present invention can be executed.

The transmission unit 210 generates a transmission signal from transmission data and transmits the transmission signal wirelessly. The reception unit 220 wirelessly receives various kinds of signals and acquires higher layer signals from received physical layer signals. The reception unit 220 includes a function of receiving NR-PSS, NR-SSS, NR-PBCH, and DL/UL/SL control signals or the like transmitted from the base station 10. Further, for example, the transmission unit 210 transmits a physical sidelink control channel (PSCCH), a physical sidelink shared channel (PSSCH), a physical sidelink discovery channel (PSDCH), a physical sidelink broadcast channel (PSBCH), and the like to another terminal 20 as D2D communication, and the reception unit 220 receives PSCCH, PSSCH, PSDCH, PSBCH, and the like from another terminal 20.

The configuration unit 230 stores various kinds of configuration information received from the base station 10 by the reception unit 220. The configuration unit 230 also stores the preset configuration information. For example, content of the configuration information is information related to the WUS reception settings and the paging reception settings corresponding to the UE capabilities of the terminal 20 or the like.

The control unit 240 performs control related to the reception of the WUS and the paging as described in the embodiment. The functional unit related to signal transmission in the control unit 240 may be included in the transmission unit 210, and the functional unit related to signal reception in the control unit 240 may be included in the reception unit 220.

### (Hardware configuration)

In the block diagrams (Figs. 21 and 22) used for describing the embodiment, the blocks of the functional units are illustrated. The functional blocks (configuring units) may be implemented by an arbitrary combination of hardware and/or software. In addition, the implementation method of each function block is not particularly limited. In other words, each functional block may be implemented by one device which is physically or logically combined or may be implemented by a plurality of devices, that is, two or more devices which are physically and/or logically separated and are directly or indirectly connected (for example, a wired and/or wireless manner). The function block may be implemented by combining software with the one device or the plurality of devices.

The functions include determining, deciding, judging, computing, calculating, processing, deriving, investigating, searching, confirming, receiving, transmitting, outputting, accessing, resolving, selecting, choosing, establishing, comparing, assuming, expectation, regarding, broadcasting, notifying, communicating, forwarding, configuring, reconfiguring, allocating, mapping, assigning, and the like but are not limited thereto. For example, a functional block (configuring unit) that causes transmission to function is referred to as a transmission unit or a transmitter. In any case, as described above, an implementation method is not particularly limited.

For example, the base station 10, the terminal 20, or the like in one embodiment of the present disclosure may function as a computer for processing the present disclosure's wireless communication method. Fig. 23 is a diagram illustrating an example of a hardware configuration of the base station 10 and the terminal 20 according to an embodiment of the present disclosure. Each of the base station 10 and the terminal 20 may be physically configured as a computer device including a processor 1001, a storage device 1002, an auxiliary storage device 1003, a communication device 1004, an input device 1005, an output device 1006, a bus 1007, and the like.

In the following description, the term "device" can be read as a circuit, device, unit, or the like. The hardware configuration of each of the base station 10 and the terminal 20 may be configured to include one or more devices illustrated in the drawing or may be configured without including some devices.

Each function in the base station 10 and the terminal 20 is implemented such that predetermined software (program) is read on hardware such as the processor 1001 and the storage device 1002, and the processor 1001 performs an operation and controls communication by the communication device 1004 and reading and/or writing of data in the storage device 1002 and the auxiliary storage device 1003.

For example, the processor 1001 operates an operating system and controls the entire computer. The processor 1001 may be configured with a central processing unit (CPU) including an interface with a peripheral device, a control device, an operation device, a register, and the like. For example, the control unit 140, the control unit 240, and the like described above may be implemented by the processor 1001.

Further, the processor 1001 reads a program (program code), a software module, or data from at least one of the auxiliary storage device 1003 and/or the communication device 1004 out to the storage device 1002, and executes various types of processes according to them. A program causing a computer to execute at least some of the operations described in the above embodiment is used as the program. For example, the control unit 140 of the base station 10 illustrated in Fig. 21 may be implemented by a control program which is stored in the storage device 1002 and operates on the processor 1001. Further, for example, the control unit 240 of the terminal 20 illustrated in Fig. 22 may be implemented by a control program which is stored in the storage device 1002 and operates on the processor 1001. Various types of processes have been described as being performed by one processor 1001 but may be performed simultaneously or sequentially by two or more processors 1001. The processor 1001 may be implemented by one or more chips. The program may be transmitted from a network via an electric communication line.

The storage device 1002 is a computer readable recording medium and configured with at least one of a read only memory (ROM), an erasable programmable ROM (EPROM), an electrically erasable programmable ROM (EEPROM), a random access memory (RAM), and the like. The storage device 1002 is also referred to as a "register," a "cache," a "main memory," or the like. The storage device 1002 can store programs (program codes), software modules, or the like which are executable for carrying out the communication method according to an embodiment of the present disclosure.

The auxiliary storage device 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The storage medium may be, for example, a database, a server, or any other appropriate medium including at least one of the storage device 1002 and the auxiliary storage device 1003.

The communication device 1004 is hardware (a transmission-and-reception device) for performing communication between computers via at least one of a wired network and a wireless network and is also referred to as a "network device," a "network controller," a "network card," a "communication module," or the like. The communication device 1004 may include a high-frequency switch, a duplexer, a filter, a frequency synthesizer, or the like in order to implement at least one of frequency division duplexing (FDD) and time division duplexing (TDD). For example, a transmission-and-reception antenna, an amplifying unit, a transmitting/receiving unit, a transmission line interface, or the like may be implemented by the communication device 1004. The transmitting/receiving unit may be implemented by to be physically or logically separated by a transmitting unit and a receiving unit.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs output to the outside. The input device 1005 and the output device 1006 may be integrated (for example, a touch panel).

The respective devices such as the processor 1001 and the storage device 1002 are connected via the bus 1007 to communicate information with each other. The bus 1007 may be configured with a single bus or may be configured with different buses between the devices.

Further, each of the base station 10 and the terminal 20 may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented using at least one of these pieces of hardware.

### (Summary of Embodiments)

As described above, according to an embodiment of the present invention, there is provided a terminal comprising a reception unit configured to receive configuration information from a base station with respect to at least one of a first wake-up signal and a second wake-up signal associated with a paging occasion, a control unit configured to determine, based on the configuration information, a position in time domain or frequency domain of a resource in which the first wake-up signal or the second wake-up signal is allocated and a communication unit configured to receive, in the resource, the first wake-up signal or the second wake-up signal, and receive a paging associated with the received first wake-up signal or the received second wake-up signal, wherein the control unit determines, based on a position in time domain and frequency domain of the second wake-up signal indicated by the configuration information, the position in time domain or frequency domain of the resource.

With the above configuration, a terminal 20 can monitor WUS resources to which legacy WUS and Rel-16_WUS are allocated based on the position of the legacy WUS in time domain and frequency domain, depending on the associated UE group ID. That is, a wake-up signal to be monitored can be correctly specified in a wireless communication system.

The control unit may determine a position in time domain or frequency domain of a resource in which the first wake-up signal is allocated at a same position in time domain of the second wake-up signal indicated by the configuration information. This configuration allows a terminal 20 can monitor WUS resources to which Rel-16_WUS is allocated according to an associated UE group ID by efficient signaling.

The control unit may determine a position in time domain of a resource to which the first wake-up signal is allocated based on a relative position in time domain from the second wake-up signal indicated by the configuration information, or determine a position in frequency domain of a resource to which the first wake-up signal is allocated in a similar way to a position in frequency domain of the second wake-up signal indicated by the configuration information. This configuration allows a terminal 20 can monitor WUS resources to which Rel-16_WUS is allocated according to an associated UE group ID by efficient signaling.

The control unit may determine a position in time domain or frequency domain of a resource to which the first wake-up signal is allocated based on information indicating that the first wake-up signal and the second wake-up signal are allocated to a same resource as indicated by the configuration information. This configuration allows a terminal 20 to monitor WUS resources to which Rel-16_WUS is allocated according to an associated UE group ID by efficient signaling.

According to an embodiment of the present invention, there is provided a base station comprising a transmission unit configured to transmit, to a terminal, configuration information with respect to at least one of a first wake-up signal and a second wake-up signal associated with a paging occasion, a control unit configured to determine, based on the configuration information, a position in time domain or frequency domain of a resource to which the first wake-up signal or the second wake-up signal is allocated and a communication unit configured to transmit, in the resource, the first wake-up signal or the second wake-up signal, and transmit a paging associated with the transmitted first wake-up signal or the second wake-up signal to the terminal, wherein the control unit determines, based on a position in time domain and frequency domain of the second wake-up signal indicated by the configuration information, the position in time domain or frequency domain of the resource.

With the above configuration, a terminal 20 can monitor WUS resources to which legacy WUS and Rel-16_WUS are allocated based on the position of the legacy WUS in time domain and frequency domain, depending on the associated UE group ID. That is, a wake-up signal to be monitored can be correctly specified in a wireless communication system.

There is provided a method of communication comprising the following steps executed by a terminal: a reception step of receiving configuration information from a base station with respect to at least one of a first wake-up signal and a second wake-up signal associated with a paging occasion, a control step of determining, based on the configuration information, a position in time domain or frequency domain of a resource in which the first wake-up signal or the second wake-up signal is allocated and a communication step of receiving in the resource the first wake-up signal or the second wake-up signal and receiving from the base station a paging associated with the received first wake-up signal or the received second wake-up signal, wherein the control step further including a step of determining a position in time domain or frequency domain of the resource based on a position in time domain and frequency domain of the second wake-up signal indicated by the configuration information.

With the above configuration, a terminal 20 can monitor WUS resources to which legacy WUS and Rel-16_WUS are allocated based on the position of the legacy WUS in time domain and frequency domain, depending on the associated UE group ID. That is, a wake-up signal to be monitored can be correctly specified in a wireless communication system.

### (Supplement to embodiments)

The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention, matters described in two or more items may be combined and used if necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station 10 and the terminal 20 have been described using the functional block diagrams, but such devices may be implemented by hardware, software, or a combination thereof. Software executed by the processor included in the base station 10 according to the embodiment of the present invention and software executed by the processor included in the terminal 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Further, an indication of information is not limited to the aspect or embodiment described in the present disclosure and may be given by any other method. For example, the indication of information may be given by physical layer signaling (for example, downlink control information (DCI) or uplink control information (UCI), upper layer signaling (for example, radio resource control (RRC) signaling, medium access control (MAC) signaling, broadcast information (master information block (MIB), system information block (SIB))), other signals, or a combination thereof. Further, the RRC signaling may be referred to as an RRC message and may be, for example, an RRC connection setup message, an RRC connection reconfiguration message, or the like.

Each aspect and embodiment of the present invention may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using any other appropriate system, a next generation systems extended on the basis of these standards, or the like. Further, a plurality of systems may be combined and applied (for example, a combination of at least one of LTE and LTE-A and 5G or the like).

The processing procedures, the sequences, the flowcharts, and the like of the respective aspects/embodiments described in this specification may be reversed in order unless there is a contradiction. For example, the method described in the present disclosure presents elements of various steps using an exemplary order and is not limited to a presented specific order.

In this specification, a specific operation that is supposed to be performed by the base station 10 may be performed by an upper node in some cases. In the network including one or more network nodes including the base station 10, various operations performed for communication with the terminal 20 can be obviously performed by at least one of the base station and any network node (for example, an MME, an S-GW, or the like is considered, but it is not limited thereto) other than the base station 10 and/or the base station 10. The example in which the number of network nodes excluding the base station 10 is one has been described above, but other network nodes in which a plurality of other network nodes (for example, an MME and an S-GW) are combined may be provided.

Information, a signal, or the like described in the present disclosure may be output from an upper layer (or a lower layer) to a lower layer (or an upper layer). Information, a signal, or the like described in the present disclosure may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination the present disclosure may be performed in accordance with a value (0 or 1) indicated by one bit, may be performed in accordance with a Boolean value (true or false), or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Further, software, commands, information, and the like may be transmitted and received via a transmission medium. For example, when software is transmitted from a web site, a server, or any other remote source using at least one of a wired technology (such as a coaxial cable, a fiber optic cable, a twisted pair, or a digital subscriber line (DSL)) and a radio technology (such as infrared rays or a microwave), at least one of the wired technology and the wireless technology are included in a definition of a transmission medium.

Information, signals, and the like described in this specification may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or an arbitrary combination thereof.

The terms described in the present disclosure and terms necessary for understanding the present disclosure may be replaced with terms having the same or similar meanings. For example, at least one of a channel and a symbol may be a signal. Further, a signal may be a message. Further, a component carrier (CC) may be referred to as a "carrier frequency," a "cell," or the like.

The terms "system" and "network" used in the present disclosure are used interchangeably.

Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names allocated to the various channels and the information elements are not limited in any respect.

In the present disclosure, the terms "base station (BS)", "radio base station", "base station", "fixed station", "Node B", "eNode B (eNB)", "gNodeB (gNB)", "access point", "transmission point", "reception point", "transmission/reception point", "cell", "sector", "cell group2, "carrier", "component carrier", and the like can be used interchangeably. The base stations may also be indicated by terms such as a macro cell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "mobile station (MS)", "user terminal", "user equipment (UE) ", "terminal", and the like can be used interchangeably.

The mobile station may be a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, it may also be referred to as a remote terminal, handset, user agent, mobile client, client, or some other suitable term.

At least one of the base station and the mobile station may be also referred to as a transmitting device, a receiving device, a communication device, or the like. At least one of the base station and the mobile station may be a device installed in a mobile body, a mobile body itself, or the like. The moving body may be a vehicle (for example, a car, an airplane, or the like), a moving body that moves unmanned (for example, a drone, an autonomous car or the like), or a robot (manned type or unmanned type) . At least one of the base station and the mobile station includes a device which need not necessarily move during a communication operation. For example, at least one of the base station and the mobile station may be an Internet of things (IoT) device such as a sensor.

Further, the base station in the present disclosure may be replaced with a user terminal. For example, each aspect/embodiment of the present disclosure may be applied to a configuration in which communication between the base station and the user terminal is replaced with communication between a plurality of user terminal 20 (for example, which may be referred to as device-to-device (D2D) or vehicle-to-everything (V2X)). In this case, the terminal 20 may have the functions of the base station 10 described above. Further, the terms "uplink" and "downlink" may be replaced with terms (for example, "side") corresponding to inter-terminal communication. For example, an uplink channel, a downlink channel, or the like may be read with side channels.

Similarly, the user terminal in the present disclosure may be replaced with the base station. In this case, the base station may have the functions of the above-mentioned user terminal.

The terms "determining" and "deciding" used in this specification may include a wide variety of actions. For example, "determining" and "deciding" may include, for example, events in which events such as judging, calculating, computing, processing, deriving, investigating, looking up, search, and inquiry (for example, looking up in a table, a database, or another data structure), or ascertaining are regarded as "determining" or "deciding." Further, "determining" and "deciding" may include, for example, events in which events such as receiving (for example, receiving information), transmitting (for example, transmitting information), input, output, or accessing (for example, accessing data in a memory) are regarded as "determining" or "deciding." Further, "determining" and "deciding" may include, for example, events in which events such as resolving, selecting, choosing, establishing, or comparing are regarded as "determining" or "deciding." In other words, "determining" and "deciding" may include events in which a certain operation is regarded as "determining" or "deciding". Further, "determining (deciding) " may be replaced with "assuming", "expecting", "considering", or the like.

Terms "connected", "coupled", or variations thereof means any direct or indirect connection or coupling between two or more elements and may include the presence of one or more intermediate elements between two elements which are "connected" or "coupled". The coupling or the connection between the elements may be physical, logical, or a combination thereof. For example, "connection" may be replaced with "access". In a case in which used in the present disclosure, two elements may be considered to be "connected" or "coupled" with each other using at least one of one or more electric wires, cables and/or a printed electrical connection or using electromagnetic energy having a wavelength in a radio frequency domain, a microwave region, or an light (both visible and invisible) region as non-limiting and non-exhaustive examples.

A reference signal may be abbreviated as RS and may be referred to as a pilot, depending on a standard to be applied.

A phrase "on the basis of" used in the present disclosure is not limited to "on the basis of only" unless otherwise stated. In other words, a phrase "on the basis of" means both "on the basis of only" and "on the basis of at least."

Any reference to an element using a designation such as "first", "second", or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Further, "means" in the configuration of each of the above devices may be replaced with "unit", "circuit", "device", or the like.

In a case in which "include", "including", and variations thereof are used in the present disclosure, these terms are intended to be comprehensive, similarly to a term "comprising". Further, the term "or" used in the present disclosure is intended not to be an exclusive-OR.

A radio frame may include one or more frames in time domain. In time domain, each of one or more frames may be referred to as a sub frame. The sub frame may further include one or more slots in time domain. The sub frame may have a fixed time length (for example, 1 ms) not depending on numerology.

The numerology may be a communication parameter applied to at least one of transmission and reception of a certain signal or channel. For example, the numerology may indicate at least one of a sub carrier spacing (SCS), a bandwidth, a symbol length, a cyclic prefix length, a transmission time interval (TTI), a number of symbols per TTI, a radio frame configuration, a specific filtering process performed in frequency domain by a transceiver, a specific windowing process performed in time domain by a transceiver, and the like.

The slot may include one or more symbols (orthogonal frequency division multiplexing (OFDM) symbols, single carrier frequency division multiple access (SC-FDMA) symbols, or the like) in time domain. The slot may be a time unit based on the numerology.

The slot may include a plurality of mini slots. Each mini slot may include one or more symbols in time domain. Further, the mini slot may be referred to as a sub-slot. The mini slot may include fewer symbols than a slot. A PDSCH (or PUSCH) transmitted in units of times greater than the mini slot may be referred to as a PDSCH (or PUSCH) mapping type A. A PDSCH (or PUSCH) transmitted using a mini slot may be referred to as a PDSCH (or PUSCH) mapping type B.

All of a radio frame, a sub frame, a slot, a mini slot, and a symbol indicates a time unit for transmitting a signal. As a radio frame, a sub frame, a slot, a mini slot, and a symbol, different designations respectively corresponding to them may be used.

For example, one sub frame may be referred to as a transmission time interval (TTI: Transmission Time Interval), or a plurality of consecutive sub frames may be referred to as TTIs, or one slot or one mini slot may be referred to as a TTI. In other words, at least one of the subframe and the TTI may be a sub frame (1 ms) in the existing LTE, may be a period shorter than 1 ms (for example, 1 to 13 symbols), or may be referred to as a period longer than 1 ms. A unit representing the TTI may be referred to as slot, a mini slot, or the like instead of the sub frame.

Here, for example, the TTI refers to a minimum time unit of scheduling in wireless communication. For example, in the LTE system, the base station performs scheduling of allocating a radio resource (a frequency bandwidth, a transmission power, or the like which can be used in each user terminal 20) to each user terminal 20 in units of TTIs. The definition of the TTI is not limited thereto.

The TTI may be a transmission time unit such as a channel coded data packet (transport block), a code block, or a code word, or may be a processing unit such as scheduling or link adaptation. Further, when a TTI is given, a time interval (for example, the number of symbols) in which a transport block, a code block, a code word, or the like is actually mapped may be shorter than the TTI.

Further, when one slot or one mini slot is referred to as a TTI, one or more TTIs (that is, one or more slots or one or more mini slots) may be a minimum time unit of scheduling. Further, the number of slots (the number of mini slots) constituting the minimum time unit of scheduling may be controlled.

A TTI having a time length of 1 ms may be referred to as a common TTI (TTI in LTE Rel. 8 to 12), a normal TTI, a long TTI, a common sub frame, a normal sub frame, a long sub frame, a slot, or the like. A TTI shorter than the common TTI may be referred to as a reduced TTI, a short TTI, a partial TTI (a partial or fractional TTI), a reduced sub frame, a short sub frame, a mini slot, a sub slot, a slot, or the like.

Further, a long TTI (for example, a common TTI, a sub frame, or the like) may be replaced with a TTI having a time length exceeding 1 ms, and a short TTI (for example, a reduced TTI or the like) may be replaced with a TTI having a TTI length which is less than a TTI length of a long TTI and equal to or more than 1 ms.

The resource block (RB) is a resource allocation unit in time domain and frequency domain and may include one or more consecutive subcarriers in frequency domain. The number of sub carriers included in an RB may be the same irrespective of a numerology and may be, for example, 12. The number of sub carriers included in an RB may be decided on the basis of a numerology.

Further, a time domain of an RB may include one or more symbols and may be a length of one slot, one mini slot, one sub frame, or one TTI. Each of one TTI, one sub frame, or the like may be constituted by one or more resource blocks.

Further, one or more RBs may be referred to as a physical resource block (PRB), a sub carrier group (SCG), a resource element group (REG), a PRB pair, an RB pair, or the like.

Further, the resource block may be constituted by one or more resource elements (RE). For example, one RE may be a radio resource region of one subcarrier and one symbol.

A bandwidth part (BWP) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and it may not be assumed that the UE transmits and receives a predetermined signal/channel outside an active BWP. Further, a "cell," a "carrier," or the like in the present disclosure may be replaced with a "BWP."

Structures of the radio frame, the sub frame, slot, the mini slot, and the symbol are merely examples. For example, configurations such as the number of sub frames included in a radio frame, the number of slots per sub frame or radio frame, the number of mini slots included in a slot, the number of symbols and RBs included in a slot or a mini slot, the number of sub carriers included in an RB, the number of symbols in a TTI, a symbol length, a cyclic prefix (CP) length, and the like can be variously changed.

In the entire present disclosure, for example, when an article such as "a", "an", or "the" in English is added by a translation, the present disclosure may include a case in which a noun following the article is the plural.

In the present disclosure, a term "A and B are different" may mean "A and B are different from each other." Further, the term may mean "each of A and B is different from C." Terms such as "separated", "coupled", or the like may also be interpreted in similarly to "different".

Each aspect/embodiment described in this specification may be used alone, in combination, or may be switched in accordance with the execution. Further, indication of predetermined information (for example, indication of "being X") is not limited to being performed explicitly, but may be performed by implicit (for example, by giving no indication of predetermined information).

In the present disclosure, the PO is an example of a paging occasion. The WUS is an example of the wake-up signal. The WUS resource is an example of resource. Rel-16_WUS is an example of a first wake-up signal. Legacy WUS or Rel-15_WUS is an example of a second wake-up signal. The transmission unit 210 or the reception unit 220 is an example of a communication unit. The transmission unit 110 or the reception unit 120 is an example of a communication unit.

Although the present disclosure has been described above in detail, it is obvious to those skilled in the art that the present disclosure is not limited to the embodiments described in the present disclosure. Therefore, the description of the present disclosure is for the purpose of illustration and does not have any restrictive meaning to the present disclosure.

### [REFERENCE SIGNS LIST]

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device

## Claims

1. A terminal (20) comprising:
a reception unit (220) configured to receive configuration information from a base station (10) with respect to a first wake-up signal and a second wake-up signal associated with a paging occasion; and
a control unit (240) configured to determine, based on the configuration information, a position in time domain or frequency domain of a resource in which the first wake-up signal or the second wake-up signal is allocated,
wherein the reception unit (220) is configured to monitor, upon receiving the first wake-up signal or the second wake-up signal in the resource, the paging occasion,
wherein the control unit (240) is configured to determine the position in time domain or frequency domain of the resource in which the first wake-up signal is allocated based on whether the configuration information indicates that the first wake-up signal and the second wake-up signal are allocated in a same resource, and
**characterized in that**
the configuration information includes a parameter indicating a number of consecutive paging occasions associated with the first wake-up signal and a second parameter indicating a second number of consecutive paging occasions associated with the second wake-up signal.

2. The terminal (20) according to claim 1, wherein the control unit (240) is configured to determine the position in frequency domain of the resource in which the first wake-up signal is allocated to be a position that is the same as the position in the frequency domain of the second wake-up signal indicated by the configuration information.

3. The terminal (20) according to claim 1 or 2, wherein the control unit (240) is configured to determine the position in the frequency domain of the resource in which the first wake-up signal is allocated, the position in the time domain of the first wake-up signal being the same as the position in the time domain of the second wake-up signal indicated by the configuration information.

4. A base station (10) comprising:
a transmission unit (110) configured to transmit configuration information to a terminal (20) with respect to a first wake-up signal and a second wake-up signal associated with a paging occasion;
a control unit (140) configured to determine, based on the configuration information, a position in time domain or frequency domain of a resource in which the first wake-up signal or the second wake-up signal is allocated,
wherein the transmission unit (110) is configured to transmit the first wake-up signal or the second wake-up signal, the first wake-up signal or the second wake-up signal being for causing the terminal (20) to monitor the paging occasion in the resource,
wherein the control unit (140) is configured to configure, to the configuration information so that the configuration information indicates whether the first wake-up signal and the second wake-up signal are allocated in a same resource, and
**characterized in that**
the control unit (140) is configured to include, in the configuration information, a parameter indicating a number of consecutive paging occasions associated with the first wake-up signal and a second parameter indicating a second number of consecutive paging occasions associated with the second wake-up signal.

5. A communication method executed by a terminal (20), the communication method comprising:
receiving configuration information from a base station (10) with respect to a first wake-up signal and a second wake-up signal associated with a paging occasion;
determining, based on the configuration information, a position in time domain or frequency domain of a resource in which the first wake-up signal or the second wake-up signal is allocated; and
upon receiving the first wake-up signal or the second wake-up signal in the resource, monitoring the paging occasion,
wherein the determining determines the position in time domain or frequency domain of the resource in which the first wake-up signal is allocated based on whether the configuration information indicates that the first wake-up signal and the second wake-up signal are allocated in a same resource, and
**characterized in that**
the configuration information includes a parameter indicating a number of consecutive paging occasions associated with the first wake-up signal and a second parameter indicating a second number of consecutive paging occasions associated with the second wake-up signal.

6. A communication system comprising: a base station (10); and a terminal (20), wherein
the base station includes (10):
a transmission unit (110) configured to transmit configuration information to the terminal (20) with respect to a first wake-up signal and a second wake-up signal associated with a paging occasion; and
a control unit (140) configured to determine, based on the configuration information, a position in time domain or frequency domain of a resource to which the first wake-up signal or the second wake-up signal is allocated, wherein
the transmission unit (110) is configured to transmit the first wake-up signal or the second wake-up signal, the first wake-up signal or the second wake-up signal being for causing the terminal to monitor the paging occasion in the resource, and
the control unit (140) is configured to set the configuration information so that the configuration information indicates whether the first wake-up signal and the second wake-up signal are allocated in a same resource,
the terminal (20) includes:
a reception unit (220) configured to receive the configuration information from the base station (10);
a second control unit (240) configured to determine, based on the configuration information, the position in time domain or frequency domain of the resource in which the first wake-up signal or the second wake-up signal is allocated,
wherein the reception unit (220) of the terminal (20) is configured to, upon receiving the first wake-up signal or the second wake-up signal in the resource, monitor the paging occasion,
wherein the second control unit (240) of the terminal (20) is configured to determine, the position in time domain or frequency domain of the resource in which the first wake-up signal is allocated based on whether the configuration information indicates that the first wake-up signal and the second wake-up signal are allocated in a same resource, and
**characterized in that**
the configuration information includes a parameter indicating a number of consecutive paging occasions associated with the first wake-up signal and a second parameter indicating a second number of consecutive paging occasions associated with the second wake-up signal.

## Patentansprüche

1. Endgerät (20), umfassend:
eine Empfangseinheit (220), die zum Empfangen von Konfigurationsinformationen von einer Basisstation (10) in Bezug auf ein erstes Wake-up-Signal und ein zweites Wake-up-Signal, die einem Paging-Anlass zugeordnet sind, konfiguriert ist; und
eine Steuereinheit (240), die zum Bestimmen einer Position in einem Zeitbereich oder Frequenzbereich einer Ressource, in der das erste Wake-up-Signal oder das zweite Wake-up-Signal zugewiesen ist, auf der Grundlage der Konfigurationsinformationen konfiguriert ist,
wobei die Empfangseinheit (220) zum Überwachen des Paging-Anlasses beim Empfangen des ersten Wake-up-Signals oder des zweiten Wake-up-Signals in der Ressource konfiguriert ist,
wobei die Steuereinheit (240) zum Bestimmen der Position im Zeitbereich oder Frequenzbereich der Ressource, in der das erste Wake-up-Signal zugewiesen ist, auf der Grundlage dessen konfiguriert ist, ob die Konfigurationsinformationen anzeigen, dass das erste Wake-up-Signal und das zweite Wake-up-Signal in derselben Ressource zugewiesen sind, und
**dadurch gekennzeichnet, dass**
die Konfigurationsinformationen einen Parameter, der eine Anzahl aufeinanderfolgender Paging-Anlässe angibt, die dem ersten Wake-up-Signal zugeordnet sind, und einen zweiten Parameter, der eine zweite Anzahl aufeinanderfolgender Paging-Anlässe angibt, die dem zweiten Wake-up-Signal zugeordnet sind, einschließen.

2. Endgerät (20) nach Anspruch 1, wobei die Steuereinheit (240) zum Bestimmen konfiguriert ist, dass die Position im Frequenzbereich der Ressource, in der das erste Wake-up-Signal einer Position zugewiesen ist, eine Position ist, die dieselbe ist wie die Position im Frequenzbereich des zweiten Wake-up-Signals, die durch die Konfigurationsinformationen angegeben ist.

3. Endgerät (20) nach Anspruch 1 oder 2, wobei die Steuereinheit (240) zum Bestimmen der Position im Frequenzbereich der Ressource, in der das erste Wake-up-Signal zugewiesen ist, konfiguriert ist, wobei die Position im Zeitbereich des ersten Wake-up-Signals dieselbe ist wie die Position im Zeitbereich des zweiten Wake-up-Signals, die durch die Konfigurationsinformationen angegeben ist.

4. Basisstation (10), umfassend:
eine Übertragungseinheit (110), die zum Übertragen von Konfigurationsinformationen in Bezug auf ein erstes Wake-up-Signal und ein zweites Wake-up-Signal, die einem Paging-Anlass zugeordnet sind, an ein Endgerät (20) konfiguriert ist;
eine Steuereinheit (140), die zum Bestimmen einer Position in einem Zeitbereich oder Frequenzbereich einer Ressource, in der das erste Wake-up-Signal oder das zweite Wake-up-Signal zugewiesen ist, auf der Grundlage der Konfigurationsinformationen konfiguriert ist,
wobei die Übertragungseinheit (110) zum Übertragen des ersten Wake-up-Signals oder des zweiten Wake-up-Signals konfiguriert ist, wobei das erste Wake-up-Signal oder das zweite Wake-up-Signal dazu dient, das Endgerät (20) dazu zu veranlassen, den Paging-Anlass in der Ressource zu überwachen,
wobei die Steuereinheit (140) zum Konfigurieren der Konfigurationsinformationen konfiguriert ist, sodass die Konfigurationsinformationen angeben, ob das erste Wake-up-Signal und das zweite Wake-up-Signal in derselben Ressource zugewiesen sind, und
**dadurch gekennzeichnet, dass**
die Steuereinheit (140) zum Einschließen eines Parameters, der eine Anzahl aufeinanderfolgender Paging-Anlässe angibt, die dem ersten Wake-up-Signal zugeordnet sind, und eines zweiten Parameters, der eine zweite Anzahl aufeinanderfolgender Paging-Anlässe angibt, die dem zweiten Wake-up-Signal zugeordnet sind, in die Konfigurationsinformationen konfiguriert ist.

5. Kommunikationsverfahren, das von einem Endgerät (20) ausgeführt wird, wobei das Kommunikationsverfahren Folgendes umfasst:
Empfangen von Konfigurationsinformationen von einer Basisstation (10) in Bezug auf ein erstes Wake-up-Signal und ein zweites Wake-up-Signal, die einem Paging-Anlass zugeordnet sind;
Bestimmen einer Position im Zeitbereich oder Frequenzbereich einer Ressource, in der das erste Wake-up-Signal oder das zweite Wake-up-Signal zugewiesen ist, auf der Grundlage der Konfigurationsinformationen; und
Überwachen des Paging-Anlasses beim Empfangen des ersten Wake-up-Signals oder des zweiten Wake-up-Signals in der Ressource,
wobei das Bestimmen die Position im Zeitbereich oder Frequenzbereich der Ressource, in der das erste Wake-up-Signal zugewiesen ist, auf der Grundlage dessen bestimmt, ob die Konfigurationsinformationen angeben, dass das erste Wake-up-Signal und das zweite Wake-up-Signal in derselben Ressource zugewiesen sind, und
**dadurch gekennzeichnet, dass**
die Konfigurationsinformationen einen Parameter, der eine Anzahl aufeinanderfolgender Paging-Anlässe angibt, die dem ersten Wake-up-Signal zugeordnet sind, und einen zweiten Parameter, der eine zweite Anzahl aufeinanderfolgender Paging-Anlässe angibt, die dem zweiten Wake-up-Signal zugeordnet sind, einschließen.

6. Kommunikationssystem, umfassend: eine Basisstation (10); und ein Endgerät (20), wobei
die Basisstation Folgendes einschließt (10):
eine Übertragungseinheit (110), die zum Übertragen von Konfigurationsinformationen in Bezug auf ein erstes Wake-up-Signal und ein zweites Wake-up-Signal, die einem Paging-Anlass zugeordnet ist, an das Endgerät (20) konfiguriert ist; und
eine Steuereinheit (140), die zum Bestimmen einer Position im Zeitbereich oder Frequenzbereich einer Ressource, der das erste Wake-up-Signal oder das zweite Wake-up-Signal zugewiesen ist, auf der Grundlage der Konfigurationsinformationen konfiguriert ist, wobei
die Übertragungseinheit (110) zum Übertragen des ersten Wake-up-Signals oder des zweiten Wake-up-Signals konfiguriert ist, wobei das erste Wake-up-Signal oder das zweite Wake-up-Signal dazu dient, das Endgerät dazu zu veranlassen, den Paging-Anlass in der Ressource zu überwachen, und
die Steuereinheit (140) zum Festlegen der Konfigurationsinformationen konfiguriert ist, sodass die Konfigurationsinformationen angeben, ob das erste Wake-up-Signal und das zweite Wake-up-Signal in derselben Ressource zugewiesen sind,
das Endgerät (20) Folgendes einschließt:
eine Empfangseinheit (220), die zum Empfangen der Konfigurationsinformationen von der Basisstation (10) konfiguriert ist;
eine zweite Steuereinheit (240), die zum Bestimmen der Position im Zeitbereich oder Frequenzbereich der Ressource, in der das erste Wake-up-Signal oder das zweite Wake-up-Signal zugewiesen ist, auf der Grundlage der Konfigurationsinformationen konfiguriert ist,
wobei die Empfangseinheit (220) des Endgeräts (20) zum Überwachen des Paging-Anlasses beim Empfangen des ersten Wake-up-Signals oder des zweiten Wake-up-Signals in der Ressource konfiguriert ist,
wobei die zweite Steuereinheit (240) des Endgeräts (20) zum Bestimmen der Position im Zeitbereich oder Frequenzbereich der Ressource, in der das erste Wake-up-Signal zugewiesen ist, auf der Grundlage dessen konfiguriert ist, ob die Konfigurationsinformationen angeben, dass das erste Wake-up-Signal und das zweite Wake-up-Signal in derselben Ressource zugewiesen sind, und
**dadurch gekennzeichnet, dass**
die Konfigurationsinformationen einen Parameter, der eine Anzahl aufeinanderfolgender Paging-Anlässe angibt, die dem ersten Wake-up-Signal zugeordnet sind, und einen zweiten Parameter, der eine zweite Anzahl aufeinanderfolgender Paging-Anlässe angibt, die dem zweiten Wake-up-Signal zugeordnet sind, einschließen.

## Revendications

1. Terminal (20) comprenant :
une unité de réception (220) configurée pour recevoir des informations de configuration provenant d'une station de base (10) par rapport à un premier signal de réveil et un deuxième signal de réveil associés à une occasion de radiomessagerie ; et
une unité de commande (240) configurée pour déterminer, sur la base des informations de configuration, une position dans le domaine temporel ou le domaine fréquentiel d'une ressource dans laquelle le premier signal de réveil ou le deuxième signal de réveil est attribué,
dans lequel l'unité de réception (220) est configurée pour surveiller, lors de la réception du premier signal de réveil ou du deuxième signal de réveil dans la ressource, l'occasion de radiomessagerie,
dans lequel l'unité de commande (240) est configurée pour déterminer la position dans le domaine temporel ou le domaine fréquentiel de la ressource dans laquelle le premier signal de réveil est attribué selon que les informations de configuration indiquent ou non que le premier signal de réveil et le deuxième signal de réveil sont attribués dans une même ressource, et
**caractérisé en ce que**
les informations de configuration incluent un paramètre indiquant un nombre d'occasions de radiomessagerie consécutives associées au premier signal de réveil et un deuxième paramètre indiquant un deuxième nombre d'occasions de radiomessagerie consécutives associées au deuxième signal de réveil.

2. Terminal (20) selon la revendication 1, dans lequel l'unité de commande (240) est configurée pour déterminer la position dans le domaine fréquentiel de la ressource dans laquelle le premier signal de réveil est attribué comme étant une position qui est la même que la position dans le domaine fréquentiel du deuxième signal de réveil indiquée par les informations de configuration.

3. Terminal (20) selon la revendication 1 ou la revendication 2, dans lequel l'unité de commande (240) est configurée pour déterminer la position dans le domaine fréquentiel de la ressource dans laquelle le premier signal de réveil est attribué, la position dans le domaine temporel du premier signal de réveil étant la même que la position dans le domaine temporel du deuxième signal de réveil indiquée par les informations de configuration.

4. Station de base (10) comprenant :
une unité de transmission (110) configurée pour transmettre des informations de configuration à un terminal (20) par rapport à un premier signal de réveil et un deuxième signal de réveil associés à une occasion de radiomessagerie ;
une unité de commande (140) configurée pour déterminer, sur la base des informations de configuration, une position dans le domaine temporel ou le domaine fréquentiel d'une ressource dans laquelle le premier signal de réveil ou le deuxième signal de réveil est attribué,
dans laquelle l'unité de transmission (110) est configurée pour transmettre le premier signal de réveil ou le deuxième signal de réveil, le premier signal de réveil ou le deuxième signal de réveil étant conçus pour amener le terminal (20) à surveiller l'occasion de radiomessagerie dans la ressource,
dans laquelle l'unité de commande (140) est configurée pour configurer les informations de configuration de sorte que les informations de configuration indiquent si le premier signal de réveil et le deuxième signal de réveil sont attribués dans une même ressource, et
**caractérisée en ce que**
l'unité de commande (140) est configurée pour inclure, dans les informations de configuration, un paramètre indiquant un nombre d'occasions de radiomessagerie consécutives associées au premier signal de réveil et un deuxième paramètre indiquant un deuxième nombre d'occasions de radiomessagerie consécutives associées au deuxième signal de réveil.

5. Procédé de communication exécuté par un terminal (20), le procédé de communication comprenant :
la réception d'informations de configuration provenant d'une station de base (10) par rapport à un premier signal de réveil et un deuxième signal de réveil associés à une occasion de radiomessagerie ;
la détermination, sur la base des informations de configuration, d'une position dans le domaine temporel ou le domaine fréquentiel d'une ressource dans laquelle le premier signal de réveil ou le deuxième signal de réveil est attribué ; et
lors de la réception du premier signal de réveil ou du deuxième signal de réveil dans la ressource, la surveillance de l'occasion de radiomessagerie,
dans lequel la détermination détermine la position dans le domaine temporel ou le domaine fréquentiel de la ressource dans laquelle le premier signal de réveil est attribué selon que les informations de configuration indiquent ou non que le premier signal de réveil et le deuxième signal de réveil sont attribués dans une même ressource, et
**caractérisé en ce que**
les informations de configuration incluent un paramètre indiquant un nombre d'occasions de radiomessagerie consécutives associées au premier signal de réveil et un deuxième paramètre indiquant un deuxième nombre d'occasions de radiomessagerie consécutives associées au deuxième signal de réveil.

6. Système de communication comprenant : une station de base (10) ; et un terminal (20), dans lequel
la station de base inclut (10) :
une unité de transmission (110) configurée pour transmettre des informations de configuration au terminal (20) par rapport à un premier signal de réveil et un deuxième signal de réveil associés à une occasion de radiomessagerie ; et
une unité de commande (140) configurée pour déterminer, sur la base des informations de configuration, une position dans le domaine temporel ou le domaine fréquentiel d'une ressource à laquelle le premier signal de réveil ou le deuxième signal de réveil est attribué, dans lequel
l'unité de transmission (110) est configurée pour transmettre le premier signal de réveil ou le deuxième signal de réveil, le premier signal de réveil ou le deuxième signal de réveil étant conçus pour amener le terminal à surveiller l'occasion de radiomessagerie dans la ressource, et
l'unité de commande (140) est configurée pour établir les informations de configuration de sorte que les informations de configuration indiquent si le premier signal de réveil et le deuxième signal de réveil sont attribués dans une même ressource,
le terminal (20) inclut :
une unité de réception (220) configurée pour recevoir les informations de configuration à partir de la station de base (10) ;
une deuxième unité de commande (240) configurée pour déterminer, sur la base des informations de configuration, la position dans le domaine temporel ou le domaine fréquentiel de la ressource dans laquelle le premier signal de réveil ou le deuxième signal de réveil est attribué,
dans lequel l'unité de réception (220) du terminal (20) est configurée pour, lors de la réception du premier signal de réveil ou du deuxième signal de réveil dans la ressource, surveiller l'occasion de radiomessagerie,
dans lequel la deuxième unité de commande (240) du terminal (20) est configurée pour déterminer la position dans le domaine temporel ou le domaine fréquentiel de la ressource dans laquelle le premier signal de réveil est attribué selon que les informations de configuration indiquent ou non que le premier signal de réveil et le deuxième signal de réveil sont attribués dans une même ressource, et
**caractérisé en ce que**
les informations de configuration incluent un paramètre indiquant un nombre d'occasions de radiomessagerie consécutives associées au premier signal de réveil et un deuxième paramètre indiquant un deuxième nombre d'occasions de radiomessagerie consécutives associées au deuxième signal de réveil.
